# EUROPEAN PATENT SPECIFICATION

(11) **EP 1 653 699 B1**
(45) Date of publication and mention of the grant of the patent: **19.09.2007**
(21) Application number: 05022872.5
(22) Date of filing: 20.10.2005
(51) Int. Cl.: H04L 29/06, H04L 12/28, H04L 12/56, H04L 12/46, H04J 3/08

(54) **Routing frames in a RPR using an IP proxy server**
Wegeleitung von Rahmen in einem RPR unter Verwendung eines IP Proxy Servers
Routage de trames dans un réseau RPR en utilisant un serveur proxy IP

(30) Priority: 29.10.2004 US 976501
(43) Date of publication of application: 03.05.2006
(73) Proprietor: FUJITSU LIMITED, Kawasaki-shi, Kanagawa 211-8588 (JP)
(72) Inventor: Harmon, David S., Plano, Texas 72025 (US); Corley, Kevin J., McKinney, Texas 75070 (US)
(74) Representative: HOFFMANN EITLE

(56) References cited:
- ROSENBERG J: "A Framework for Telephony Routing over IP" IETF STANDARD, INTERNET ENGINEERING TASK FORCE, IETF, CH, June 2000 (2000-06), pages 1-25, XP015008654 ISSN: 0000-0003
- FINEBERG V: "A PRACTICAL ARCHITECTURE FOR IMPLEMENTING END-TO-END QOS IN AN IP NETWORK" IEEE COMMUNICATIONS MAGAZINE, IEEE SERVICE CENTER,NEW YORK, NY, US, vol. 40, no. 1, January 2002 (2002-01), pages 122-130, XP001102587 ISSN: 0163-6804
- RPR ALLIANCE: "A summary and overview of the IEEE 802.17 Resilient Packet Ring standard" INET, 19 May 2003 (2003-05-19), pages 1-19, XP002305253

## Description

### TECHNICAL FIELD

This invention relates generally to the field of communications and more specifically to routing frames in an IP SONET ring using an IP proxy server.

### BACKGROUND

A communication network for a geographical area, such as a metropolitan area, may have a ring topology. As an example, a synchronous optical network (SONET) transmission system may include a ring having nodes. A node of the ring may send packets through the ring to a destination node. The destination node accepts the packets, while the other nodes ignore the packets.

Known techniques may be used to communicate packets through the ring using Internet Protocol (IP) technology. As an example, Voice over IP (VoIP) technology may be used to communicate voice packets through the ring. RFC 2871 (J. Rosenberg) discloses a framework for Telephony Routing over IP. Known techniques, however, may be inefficient in certain situations. As an example, point-to-point SONET Ethernet technology typically uses IP resources external to the ring to route the packets. The external IP resources are used even if the call is being routed to another node of the ring. Accordingly, known solutions for communicating packets may be inefficient in certain situations.

### SUMMARY OF THE DISCLOSURE

In accordance with the present invention, disadvantages and problems associated with previous techniques for routing frames may be reduced or eliminated.

The above object is achieved by the independent claims. The dependent claims refer to preferred embodiments of the invention. On the following description the words "invention" and "embodiments" are to be interpreted as used to explain the technical background only and not to describe the scope of protection.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a block diagram illustrating one embodiment of a network that includes a ring for routing packets;
FIGURES 2 through 5 are block diagrams illustrating the network of FIGURE 1 routing packets;
FIGURE 6 is a block diagram illustrating one embodiment of a proxy server of the ring of FIGURE 1; and
FIGURE 7 is a call flow diagram illustrating an example method for routing packets using the network of FIGURE 1.

### DETAILED DESCRIPTION OF THE DRAWINGS

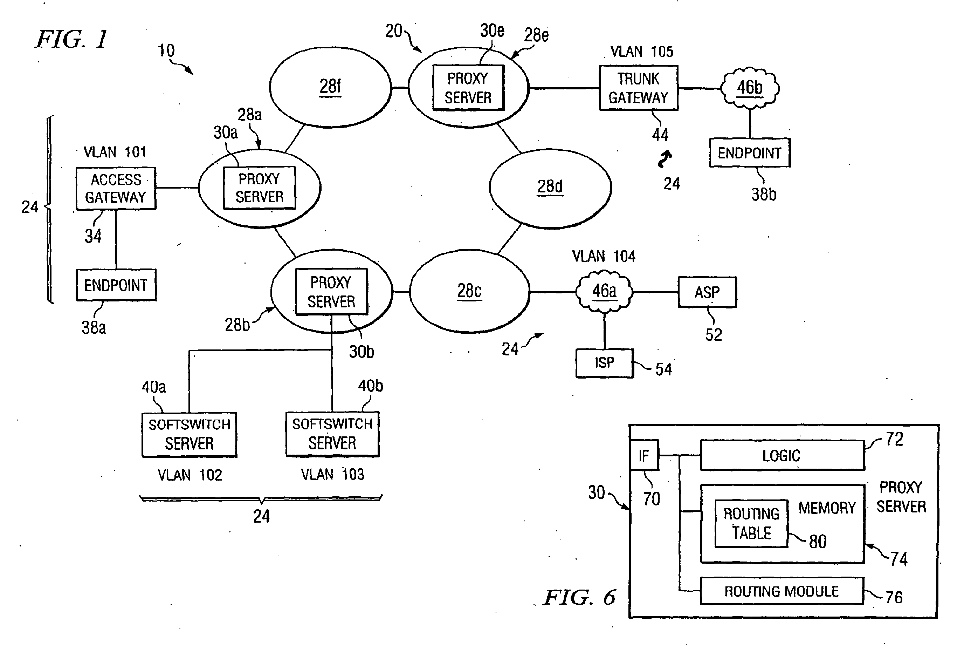

Embodiments of the present invention and its advantages are best understood by referring to FIGURES 1 through 7 of the drawings, like numerals being used for like and corresponding parts of the various drawings.

FIGURE 1 is a block diagram illustrating one embodiment of a network 10 that includes a ring 20 for routing packets. According to the embodiment, certain nodes of ring 20 include a proxy server operable to route Internet protocol (IP) packets within ring 20. Accordingly, ring 20 does not need to use external IP devices in order to route IP packets within ring 20.

According to the embodiment, network 10 communicates information in packets. A packet may comprise a bundle of data organized in a specific way for transmission, and a frame may comprise the payload of one or more packets organized in a specific way for transmission. A packet may carry any suitable information such as voice, data, audio, video, multimedia, other information, or any combination of the preceding. According to the embodiment, packets may comprise IP packets may be encapsulated into a resilient packet ring (RPR) media access control (MAC) layer for transport.

Referring to FIGURE 1, network 10 includes ring 20 coupled to access devices 24 as shown. A ring may refer to a network of communication devices that has a ring topology. Ring 20 has nodes 28. A node may refer to a point of a ring at which packets may be communicated to, from, or both to and from the ring.

According to one embodiment, ring 20 may comprise an optical fiber ring. For example, ring 20 may comprise a resilient packet ring that includes SONET devices. A resilient packet ring uses transpaths to communicate among nodes 28 of the ring. At each node, traffic that is not destined for a node simply passes through the node, and is not queued at the node. The transpath allows the resilient packet ring to operate as one continuous medium shared by the nodes. Since a packet node does not process transtraffic, a resilient packet ring may scale more easily to higher data rates. Ring 20 may transport packets communicating any suitable traffic, such time division multiplexed (TDM) traffic, and may communicate using any suitable protocol such as the Ethernet over SONET protocol.

Ring 20 may have any suitable features. For example, ring 20 may support a topology discovery procedure, such as the topology discovery procedure defined in Institute for Electrical and Electronics Engineers, Inc. (IEEE) standard 802.17. Each node 28 constructs a topology map that includes information about the location, capabilities, and health of the node 28. Each node 28 broadcasts messages including the information to other nodes 28. The messages may be generated periodically, dynamically in response to a change in the status of a node 28, or both periodically and dynamically.

Ring 20, however, may have any other suitable feature. For example, ring 20 may use statistical multiplexing for aggregation. As another example, ring 20 may use ingress policing, traffic shaping, or traffic management. Ring 20 may also provide different levels of protection or traffic classes.

Access devices 24 may include any suitable device operable to communicate with nodes 28 of ring 20. Certain access devices 24 may communicate packets using any suitable IP technology, such as a media over IP technology. For example, packets may be communicated using a voice, video, or other suitable media over IP technology. Certain access devices 24 may set up calls using any suitable protocol such as Session Initiation Protocol (SIP) or H.323. According to the illustrated embodiment, access devices include an access gateway 34, endpoints 38, softswitch servers 40, a trunk gateway 44, networks 46, an access service provider (ASP) 52, and an Internet service provider (ISP) 54 coupled as shown.

Node 28a is coupled to access gateway 34 and endpoint 38a. Access gateway 34 allows endpoint 38a to communicate with ring 20. A gateway refers to network equipment operable to route, translate, or both route and translate communications. Access gateway 34 may communicate with endpoint 38 using any suitable digital subscriber line technology, that is, xDSL technology.

An endpoint 38 represents any suitable combination or arrangement of logic for providing communication services such as telephony services. Logic may refer to hardware, software, or any combination of hardware and software. Examples of an endpoint 38 include a communication device such as a telephone, a cell phone, a personal digital assistant, a voice appliance, an answering machine, a facsimile machine, a computer, a server, or other device. An endpoint 38 may be coupled to access gateway 34 by an optical network terminal or other customer premises equipment.

Node 28b is coupled to softswitch server 40a and softswitch server 40b. A softswitch server 40 may operate as a gateway between a circuit-switched and a packet-switched network. Softswitch servers 40 may comprise Voice over IP softswitches.

Node 28c is coupled to communication network 46a, application service provider 52, and Internet service provider 54. A communication network allows nodes 28 to communicate with other networks or devices, and may comprise all or a portion of public switched telephone network (PSTN), a public or private data network, a local area network (LAN), a metropolitan area network (MAN), a wide area network (WAN), a global computer network such as the Internet, a wireline or wireless network, a local, regional, or global communication network, an enterprise intranet, other suitable communication link, or any combination of the preceding.

According to the illustrated example, communication network 46a comprises the Internet. Application service provider 52 offers software and other applications to users over the Internet. Internet service provider 54 provides access for customers to the Internet and the worldwide web.

Node 28e is coupled to trunk gateway 44, communication network 46b, and endpoint 38b. Trunk gateway 44 couples ring 20 to communication network 46b, which may comprise a public switched telephone network. Endpoint 38b may comprise an endpoint operable to communicate with communication network 46b.

An access device 24 may have one or more identifiers that uniquely identify the access device 24. Typically, an access device 24 has an identifier that identifies the access device 24 across a global or wide area network. For example, access devices 24 typically have IP addresses. According to one embodiment, an access device 24 may be assigned an identifier that identifies the access device 24 across a local or metropolitan area network, such as over ring 20. For example, an access device 24 may be assigned a private network identifier that identifies the access device 24 over ring 20. The private network identifier may comprise a virtual local area network (VLAN) identifier. According to one embodiment, the termination point of an access device 24 may be assigned the private network identifier.

According to the illustrated embodiment, access gateway 34 is assigned VLAN 101, softswitch server 40a is assigned VLAN 102, softswitch server 40b is assigned VLAN 103, communication network 46a is assigned VLAN 104, and trunk gateway 44 is assigned VLAN 105. According to one embodiment, ports of a given customer may be assigned the same private network identifier, which may be unique to each customer of the same ring 20.

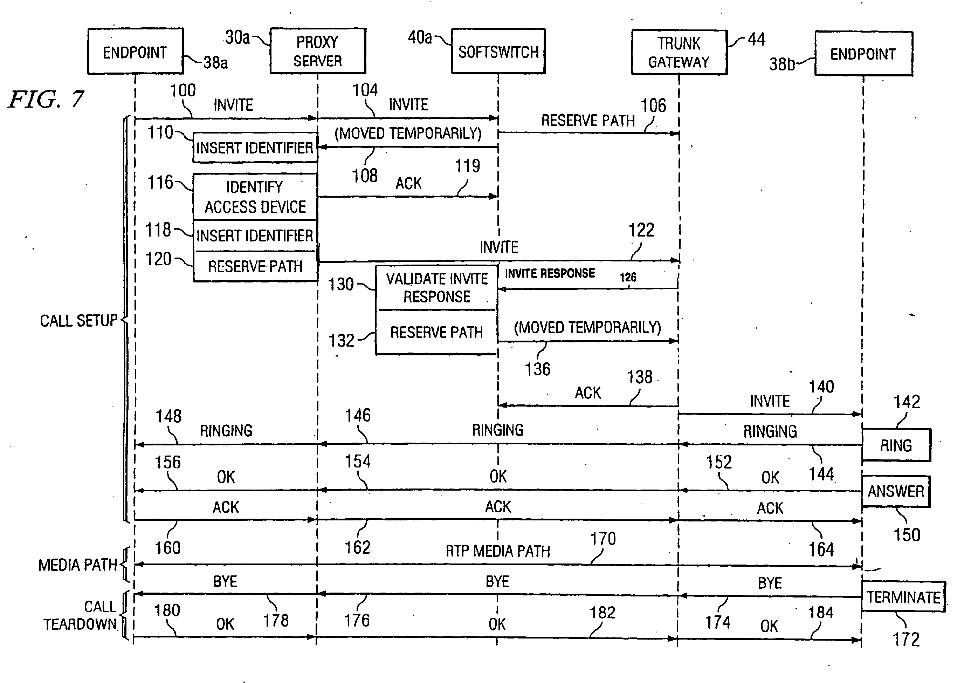

One or more nodes 28 of ring 20 may each have a proxy server 30 that provides control path management. According to one embodiment, a proxy server 30 may route IP packets within ring 20. Accordingly, ring 20 does not need to use external IP devices to route IP packets within ring 20. According to one embodiment, proxy server 30 receives packets sent by a caller endpoint 38 to a callee endpoint 38. Proxy server 30 identifies a node 28 that can route the packets to callee endpoint 38, and reserves a media path to the node 28. A media path may refer to a communication path over which packets carrying any suitable medium may be communicated. Example media paths include voice and video paths. According to one embodiment, the media path may be a real-time transport protocol (RTP) voice path. Proxy server 30 inserts the private network identifier of the node 28 into the frame of the packets to send the packets callee endpoint 38. An example embodiment of proxy server 30 is described in more detail with reference to FIGURE 6.

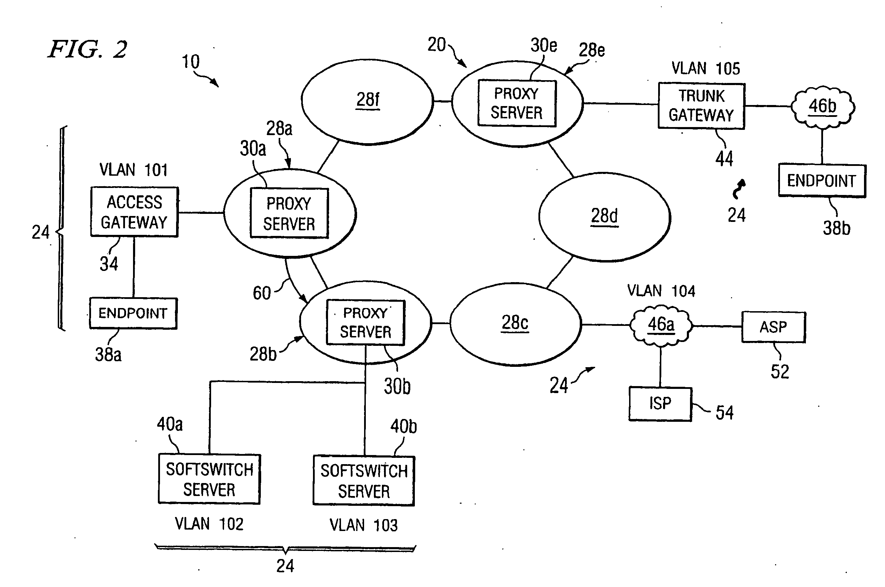

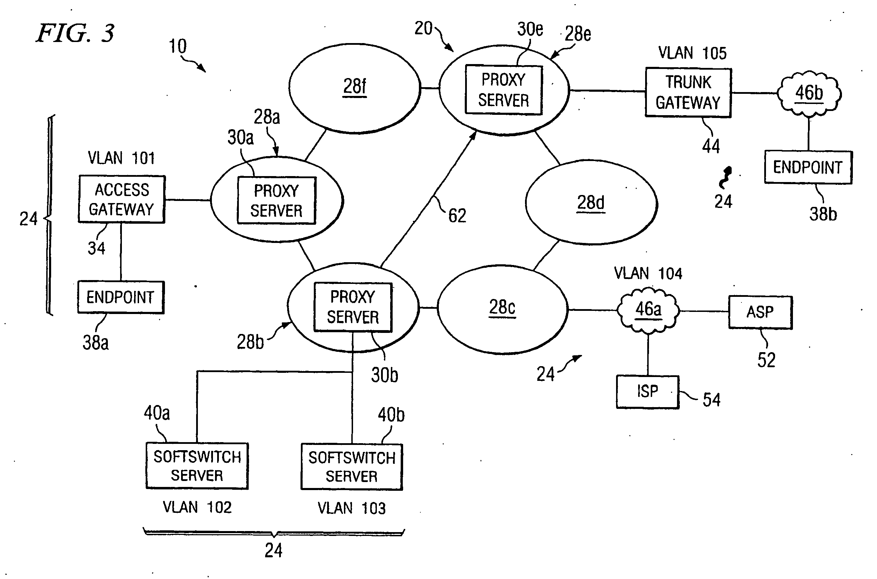

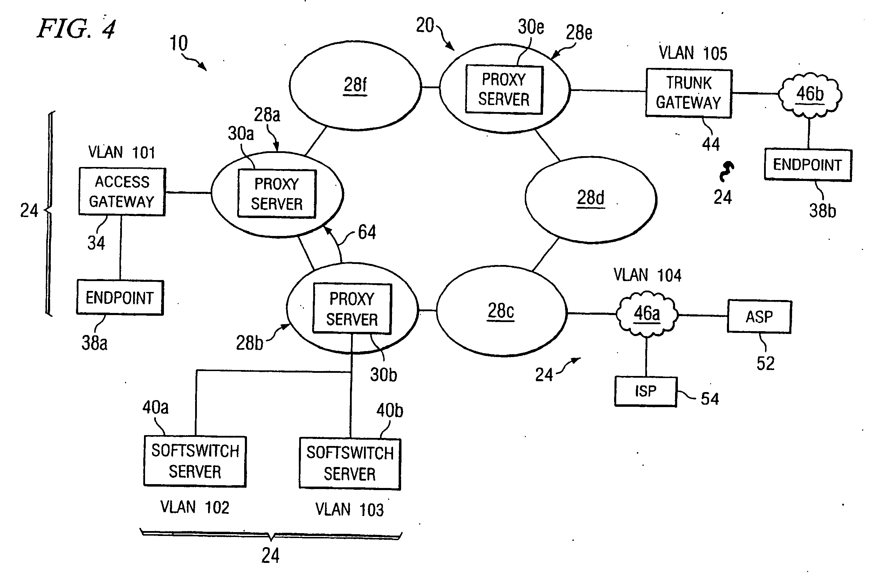

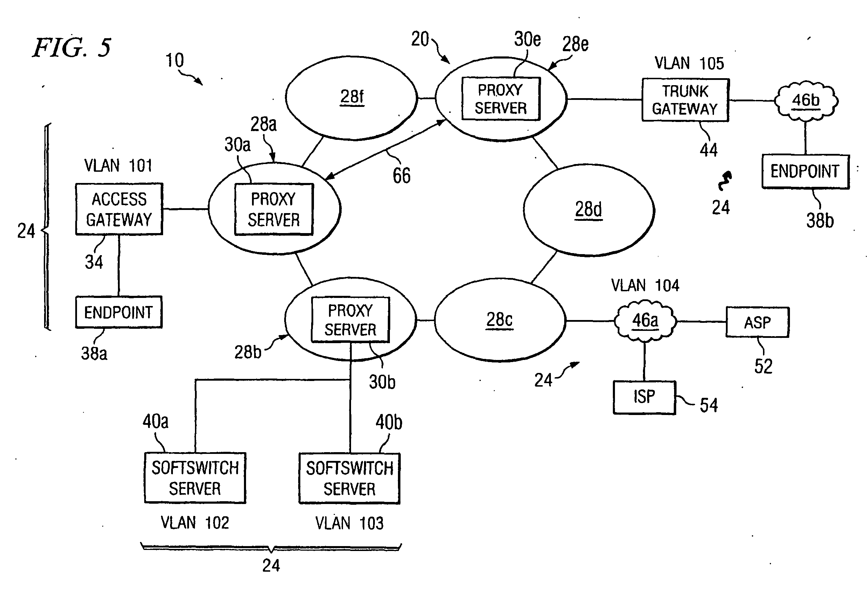

FIGURES 2 through 5 are block diagrams illustrating the network of FIGURE 1 routing packets according to an example of operation. Referring to FIGURE 2, endpoint 38a places a call to endpoint 38b. Endpoint 38a sends an invite request to proxy server 30a. The invite request is routed to softswitch 40a through proxy server 30b at step 60. Referring to FIGURE 3, softswitch 40a reserves a media path to trunk gateway 44 at step 62. Referring to FIGURE 4, softswitch 40a sends an invite response to endpoint 38a at step 64. The invite response includes the private network identifier of trunk gateway 44. Referring to FIGURE 5, a media path is established between endpoint 38a and endpoint 38b at step 66.

Network 10 may include more, fewer, or other components of any suitable arrangement. Additionally, operations of network 10 may be performed using any suitable logic comprising software, hardware, other logic, or any suitable combination of the preceding. As used in this document, "each" refers to each member of a set or each member of a subset of a set.

FIGURE 6 is a block diagram illustrating one embodiment of proxy server 30 of FIGURE 1. According to one embodiment, proxy server 30 receives packets sent by a caller endpoint 38 to a callee endpoint 38. Proxy server 30 identifies a node 28 that can route the packets to callee endpoint 38, and reserves a media path to the node 28. Proxy server 30 inserts the private network identifier of the node 28 into the frame of the packets to route the packets to callee endpoint 38.

According to the illustrated embodiment, proxy server 30 includes an interface (I/F) 70, logic 72, a memory 74, and one or more modules 76 coupled as shown. Interface 70 receives and sends data, and may comprise, for example, an Ethernet interface. As used in this document, the term "interface" refers to any suitable structure of a device operable to receive input for the device, send output from the device, or both, and may comprise one or more ports. For traffic segregation and security purposes, an interface may allow only frames having identifiers that match the identifiers of a port to be transmitted through the port. The other frames may be dropped.

Logic 72 manages the operation of proxy server 30, and may comprise any suitable hardware, software, or combination of hardware and software. For example, logic 72 may include a processor. As used in this document, the term "processor" refers to any suitable device operable to execute instructions and manipulate data to perform operations.

Memory 74 stores and facilitates retrieval of information used by logic 72, and may include Random Access Memory (RAM), Read Only Memory (ROM), magnetic drives, disk drives, Compact Disk (CD) Drives, Digital Video Disk (DVD) drives, removable media storage, any other suitable data storage device, or a combination of any of the preceding.

Memory 74 stores a routing table 80. Routing table 80 may associate the global network identifier of an access device 24 with the private network identifier of an access device 24, for example, the IP address with the VLAN identifier. Accordingly, routing table 80 allows proxy server 28 to translate between the global network identifier and the private network identifier of an access device 24. For example, routing table 80 may include private network identifiers for VoIP access devices 24. Routing table 80 may be stored in one or more databases, and may be provided to proxy servers 30 during provisioning. Alternatively or additionally, the packets may be dynamically routed using any suitable procedure. For example, the packets may be dynamically routed using an open shortest path first protocol.

Routing module 76 routes packets, and may route IP packets within ring 20. According to one embodiment, proxy server 30 receives packets sent by a caller endpoint 38 to a callee endpoint 38. Routing module 76 identifies a node 28 that can route the packets to callee endpoint 38, and reserves a media path to the node 28. Routing module 76 may identify the node 28 that can route the packets in any suitable manner. For example, routing module 76 may identify the node by forwarding an invite message from caller endpoint 38 to a switch associated with proxy server 30, receiving a progress message from the switch, and identifying the node 28 from a return IP address in the progress message.

Routing module 76 inserts the private network identifier of the node 28 into the frames of the packets to route the packets to callee endpoint 38. The private network identifier may be inserted into frames as a routing tag. A routing tag may include the private network identifier and other information such as an Ethernet type, a class, a priority, other information, or any combination of the preceding. The inserted routing tag may include information that corresponds to the information in the original frame. For example, the routing tag may include the same priority as in the original frame. Alternatively, the routing tag may include different information. For example, the routing tag may assign a new priority.

The components of proxy server 30 may be integrated or separated according to particular needs. If any of the components are separated, components may be coupled using any suitable link. Moreover, the operations of proxy server 30 may be performed by more, fewer, or other modules. Additionally, operations of proxy server 30 may be performed using any suitable logic comprising software, hardware, other logic, or any suitable combination of the preceding.

FIGURE 7 is a call flow diagram illustrating an example method for routing packets from endpoint 38a to endpoint 38b using network 10 of FIGURE 1. Steps 100 through 164 describe setting up a call. The method begins at step 100, where a caller endpoint 38a initiates a call to endpoint 38b by sending an invite request to proxy server 30a of node 28a. The invite request may be an invitation to initiate a call with endpoint 38b.

Proxy server 30a forwards the invite request to softswitch 40a, which operates an intermediate node 28 that can be used to set up a media path with endpoint 38b at step 104. An intermediate node 28 may refer to a node 28 that is associated with proxy server 30a. Softswitch 40a reserves a media path with trunk gateway 44 at step 106. According to one embodiment, the path may be a real-time transport protocol (RTP) path. Softswitch 40a sends a progress message to proxy server 30a at step 108. A progress message may refer to a progress indication that drives VoIP call states.

Proxy server 30a inserts the private network identifier for softswitch 40a into frames from endpoint 38a at step 110. Proxy server 30a may access a routing table to determine the private network identifier for softswitch 40a. For example, VLAN 102 may be determined to be the private network identifier for softswitch 40a. Proxy server 30a sends an acknowledgement to softswitch 40a at step 114.

Proxy server 30a identifies an access device 24 that can route the packets to endpoint 38b at step 116. Proxy server 30a may identify the access device 24 from a return IP address in the progress message received from softswitch 40a. For example, proxy server 30a may identify trunk gateway 44 as the access device 24. Proxy server 30a inserts the private network identifier of trunk gateway 44 into frames from endpoint 38a at step 118. Proxy server 30a may access a routing table to determine the private network identifier for trunk gateway 44. For example, VLAN 105 may be determined to be the private network identifier for trunk gateway 44. Proxy server 30a reserves the path to trunk gateway 44 at step 120.

Proxy server 30a sends an invite request to trunk gateway 44 at step 122. Trunk gateway 44 sends an invite response to softswitch 40a at step 126. Softswitch 40a validates the invite response at step 130. Softswitch 40a reserves the path at step 132 using the private network identifier of trunk gateway 44. For example, softswitch 40a may reserve the path using identifier VLAN 105. Softswitch 40a sends a progress message to trunk gateway 44 at step 136. Trunk gateway 44 sends an acknowledgement to softswitch 40a at step 138.

Trunk gateway 44 sends an invite request to endpoint 38b at step 140. The invite request may cause endpoint 38b to ring. Endpoint 38b rings at step 142. A progress message indicating that endpoint 38b is ringing is sent to endpoint 38a at steps 144, 146, and 148. Endpoint 38b answers the call at step 150. A progress message indicating that endpoint 38b has answered is sent to endpoint 38a at steps 152, 154, and 156. Endpoint 38a sends an acknowledgement to endpoint 38b at steps 160, 162, and 164.

A media path is established over the RTP channel at step 170. Endpoints 38a-b can communicate over the media path. Steps 172 through 184 describe tearing down the call. Endpoint 38b terminates the call at step 172. A progress message indicating that endpoint 38b has terminated the call is sent to endpoint a at steps 174, 176, and 178. Endpoint 38a sends acknowledgment at steps 180, 182, and 184. After the call is terminated, the method ends.

The method may include more steps.

While this disclosure has been described in terms of certain embodiments and generally associated methods, alterations and permutations of the embodiments and methods will be apparent to those skilled in the art. Accordingly, the above description of example embodiments does not constrain this disclosure. Other changes, substitutions, and alterations are also possible without departing from the scope of this disclosure, as defined by the following claims.

## Claims

1. A method for routing frames in a communication ring (20) comprising a resilient packet ring including SONET devices, comprising:
receiving an invitation (INVITE) at a proxy server (30) of a node (28), the node belonging to a ring (20), the ring comprising a plurality of nodes, each node operable to communicate with another node, the invitation indicating that a first endpoint (38a) is initiating a call to a second endpoint (38b), the first and second endpoints reachable through the ring;
identifying (116) an access device (24, 44) operable to communicate the call to the second endpoint (38b), the access device reachable through the ring, the access device having a private network identifier (VLAN) uniquely identifying the access device within the ring;
reserving (120, 132) a media path to the access device (24, 44); and
inserting, by the proxy server, the private network identifier into a plurality of frames received from the first endpoint (38a) in order to route the frames to the second endpoint (38b) through the media path.

2. The method of Claim 1, wherein:
a node is operable to communicate with another node according to the Ethernet over Synchronous Optical Network, SONET, protocol; and
the plurality of frames comprise a plurality of media over Internet Protocol, IP, packets.

3. The method of Claim 1, wherein identifying (116) the access device operable to communicate the call to the second endpoint (38b) further comprises:
forwarding (104) the invitation to an intermediate access (24, 40a) device;
receiving a progress message (108) from the intermediate access device, the progress message comprising an address corresponding to the access device; and
identifying (116) the access device in accordance with the address.

4. The method of Claim 1, wherein reserving the media path to the access device further comprises:
forwarding (104) the invitation to an intermediate access device to initiate establishment of the media path;
receiving a progress message (108) from the intermediate access device, the progress message comprising an address corresponding to the access device; and
reserving (120, 132) the path in response to receiving the progress message.

5. The method of Claim 1, wherein the media path further comprises a real-time transport protocol, RTP, path.

6. The method of Claim 1, further comprising determining the private network identifier (VLAN) associated with the access device according to a routing table (80).

7. The method of claim 1,
wherein each node is operable to communicate with another node according to the Ethernet over Synchronous Optical Network, SONET, protocol,
wherein, in the identifying step, the access device is identified by:
forwarding the invitation to an intermediate access device;
receiving a progress message from the intermediate access device, the progress message comprising an address corresponding to the access device; and
identifying the access device in accordance with the address,
wherein, in the reserving step, the media path is reserved in response to receiving the progress message, the media path further comprising a real-time transport protocol, RTP, path,
further comprising:
determining the private network identifier associated with the access device according to a routing table; and
wherein, in the inserting step, the plurality of frames comprises a plurality of media over Internet Protocol, IP, packets.

8. An apparatus for routing frames in a communication ring (20) comprising a resilient packet ring including SONET devices, comprising:
an interface (70) operable to receive an invitation (INVITE) at a proxy server (30) of a node (28), the node belonging to a ring, the ring comprising a plurality of nodes, each node operable to communicate with another node, the invitation indicating that a first endpoint (38a) is initiating a call to a second endpoint (38b), wherein the first and second endpoints are reachable through the ring; and
a routing module (76) coupled to the interface (70) and operable to:
identify (116) an access device operable to communicate the call to the second endpoint, the access device reachable through the ring, the access device having a private network identifier (VLAN) uniquely identifying the access device within the ring;
reserve (120, 132) a media path to the access device; and
insert (118) the private network identifier (VLAN) into a plurality of frames received from the first endpoint (38a) in order to route the frames to the second endpoint (38b) through the media path.

9. The apparatus of Claim 8, wherein:
a node (28) is operable to communicate with another node according to the Ethernet over Synchronous Optical Network, SONET, protocol; and
the plurality of frames comprise a plurality of media over Internet Protocol, IP, packets.

10. The apparatus of Claim 8, wherein the routing module (76) is operable to identify the access device operable to communicate the call to the second endpoint (38b) by:
forwarding (104) the invitation to an intermediate access device (24, 40a);
receiving a progress message (108) from the intermediate access device, the progress message comprising an address corresponding to the access device; and
identifying (116) the access device in accordance with the address.

11. The apparatus of Claim 8, wherein the routing module (76) is operable to reserve the media path to the access device by:
forwarding the invitation to an intermediate access device to initiate establishment of the media path;
receiving a progress message from the intermediate access device, the progress message comprising an address corresponding to the access device; and
reserving the path in response to receiving the progress message.

12. The apparatus of Claim 8, wherein the media path further comprises a real-time transport protocol, RTP, path.

13. The apparatus of Claim 8, wherein the routing module (76) is further operable to determine the private network identifier (VLAN) associated with the access device according to a routing table (80).

14. Logic for routing frames in a communication ring comprising a resilient packet ring including SONET devices, the logic embodied in medium and operable to:
receive an invitation at a proxy server of a node, the node belonging to a ring, the ring comprising a plurality of nodes, each node operable to communicate with another node, the invitation indicating that a first endpoint is initiating a call to a second endpoint, wherein the first and second endpoints are reachable through the ring;
identify an access device operable to communicate the call to the second endpoint, the access device reachable through the ring, the access device having a private network identifier uniquely identifying the access device within the ring;
reserve a media path to the access device; and
insert, by the proxy server, the private network identifier into a plurality of frames received from the first endpoint in order to route the frames to the second endpoint through the media path.

15. The logic of Claim 14, wherein:
a node is operable to communicate with another node according to the Ethernet over Synchronous Optical Network, SONET, protocol; and
the plurality of frames comprise a plurality of media over Internet Protocol, IP, packets.

16. The logic of Claim 14, further operable to identify the access device operable to communicate the call to the second endpoint by:
forwarding the invitation to an intermediate access device;
receiving a progress message from the intermediate access device, the progress message comprising an address corresponding to the access device; and
identifying the access device in accordance with the address.

17. The logic of Claim 14, further operable to reserve the media path to the access device by:
forwarding the invitation to an intermediate access device to initiate establishment of the media path;
receiving a progress message from the intermediate access device, the progress message comprising an address corresponding to the access device; and
reserving the path in response to receiving the progress message.

18. The logic of Claim 14, wherein the media path further comprises a real-time transport protocol, RTP, path.

19. The logic of Claim 14, further operable to determine the private network identifier associated with the access device according to a routing table.

20. A system for routing frames in a communication ring comprising a resilient packet ring including SONET devices, comprising:
means for receiving an invitation at a proxy server of a node, the node belonging to a ring, the ring comprising a plurality of nodes, each node operable to communicate with another node, the invitation indicating that a first endpoint is initiating a call to a second endpoint wherein the first and second endpoints are raeachable through the ring;
means for identifying an access device operable to communicate the call to the second endpoint, the access device reachable through the ring, the access device having a private network identifier uniquely identifying the access device within the ring;
means for reserving a media path to the access device; and
means for inserting, by the proxy server, the private network identifier into a plurality of frames received from the first endpoint in order to route the frames to the second endpoint through the media path.

## Patentansprüche

1. Verfahren zum Routen von Rahmen in einem Kommunikationsring (20), der eine Resilient-Packet-Ring-Technologie mit SONET-Vorrichtungen umfasst, umfassend:
Empfangen einer Aufforderung (INVITE) bei einem Proxy-Server (30) eines Knotens (28), wobei der Knoten zu einem Ring (20) gehört, wobei der Ring eine Vielzahl von Knoten umfasst, wobei jeder Knoten betriebsfähig ist, mit einem anderen Knoten zu kommunizieren, wobei die Aufforderung angibt, dass ein erster Endpunkt (38a) einen Anruf an einen zweiten Endpunkt (38b) initiiert, wobei der erste und der zweite Endpunkt durch den Ring erreichbar sind;
Identifizieren (116) einer Zugriffsvorrichtung (24, 44), die betriebsfähig ist zum Kommunizieren des Anrufs an den zweiten Endpunkt (38b), wobei die Zugriffsvorrichtung durch den Ring erreichbar ist, wobei die Zugriffsvorrichtung einen Privatnetzwerk-Identifizierer (VLAN) hat, der die Zugriffsvorrichtung eindeutig innerhalb des Rings identifiziert;
Reservieren (120, 132) eines Medienpfades zu der Zugriffsvorrichtung (24, 44); und
Einfügen, durch den Proxy-Server, des Privatnetzwerk-Identifizierers in eine Vielzahl von von dem ersten Endpunkt (38a) empfangenen Rahmen, um die Rahmen an den zweiten Endpunkt (38b) durch den Medienpfad zu routen.

2. Verfahren gemäß Anspruch 1, wobei:
ein Knoten betriebsfähig ist, mit einem anderen Knoten gemäß dem Ethernet over Synchronous Optical Network, SONET, Protokoll zu kommunizieren; und
die Vielzahl von Rahmen eine Vielzahl von Medien-über-Internet-Protocol-, IP, Paketen umfasst.

3. Verfahren gemäß Anspruch 1, wobei das Identifizieren (116) der Zugriffsvorrichtung, die zum Kommunizieren des Anrufs an den zweiten Endpunkt (38b) betriebsfähig ist, ferner umfasst:
Weiterleiten (104) der Aufforderung an eine Zwischenzugriffsvorrichtung (24, 40a);
Empfangen einer Verlaufsnachricht (108) von der Zwischenzugriffsvorrichtung, wobei die Verlaufsnachricht eine der Zugriffsvorrichtung entsprechende Adresse umfasst; und
Identifizieren (116) der Zugriffsvorrichtung in Übereinstimmung mit der Adresse.

4. Verfahren gemäß Anspruch 1, wobei das Reservieren des Medienpfades zu der Zugriffsvorrichtung ferner umfasst:
Weiterleiten (104) der Aufforderung an eine Zwischenzugriffsvorrichtung, um eine Etablierung des Medienpfades zu initiieren;
Empfangen einer Verlaufsnachricht (108) von der Zwischenzugriffsvorrichtung, wobei die Verlaufsnachricht eine der Zugriffsvorrichtung entsprechende Adresse umfasst; und
Reservieren (120, 132) des Pfades in Ansprechen auf das Empfangen der Verlaufsnachricht.

5. Verfahren gemäß Anspruch 1, wobei der Medienpfad ferner einen Echtzeittransportprotokoll-, RTP, Pfad umfasst.

6. Verfahren gemäß Anspruch 1, mit ferner einem Bestimmen des Privatnetzwerk-Identifizierers (VLAN), der mit der Zugriffsvorrichtung verknüpft ist, gemäß einer Routing-Tabelle (80).

7. Verfahren gemäß Anspruch 1, wobei jeder Knoten betriebsfähig ist, mit einem anderen Knoten gemäß dem Ehternet over Synchronous Optical Network, SONET, Protokoll zu kommunizieren,
wobei in dem Identifizierungsschritt die Zugriffsvorrichtung identifiziert wird durch:
Weiterleiten der Aufforderung an eine Zwischenzugriffsvorrichtung;
Empfangen einer Verlaufsnachricht von der Zwischenzugriffsvorrichtung, wobei die Verlaufsnachricht eine der Zugriffsvorrichtung entsprechende Adresse umfasst; und
Identifizieren der Zugriffsvorrichtung in Übereinstimmung mit der Adresse,
wobei in dem Reservierungsschritt der Medienpfad in Ansprechen auf das Empfangen der Verlaufsnachricht reserviert wird, wobei der Medienpfad ferner einen Echtzeittransportprotokoll-, RTP, Pfad umfasst,
ferner umfassend:
Bestimmen des Privatnetzwerk-Identifizierers, der mit der Zugriffsvorrichtung verknüpft ist, gemäß einer Routing-Tabelle; und
wobei in dem Einfügungsschritt die Vielzahl von Rahmen eine Vielzahl von Medien-über-Internet-Protocol-, IP, Paketen umfasst.

8. Apparat zum Routen von Rahmen in einem Kommunikationsring (20), der eine Resilient-Packet-Ring-Technologie mit SONET-Vorrichtungen umfasst, umfassend:
eine Schnittstelle (70), die betriebsfähig ist zum Empfangen einer Aufforderung (INVITE) bei einem Proxy-Server (30) eines Knotens (28), wobei der Knoten zu einem Ring gehört, wobei der Ring eine Vielzahl von Knoten umfasst, wobei jeder Ring betriebsfähig ist, mit einem anderen Knoten zu kommunizieren, wobei die Aufforderung angibt, dass ein erster Endpunkt (38a) einen Anruf an einen zweiten Endpunkt (38b) initiiert, wobei der erste und der zweite Endpunkt durch den Ring erreichbar sind; und
ein Routing-Modul (76), das mit der Schnittstelle (70) gekoppelt ist und betriebsfähig ist zum:
Identifizieren (116) einer Zugriffsvorrichtung, die betriebsfähig ist zum Kommunizieren des Anrufs an den zweiten Endpunkt, wobei die Zugriffsvorrichtung durch den Ring erreichbar ist, wobei die Zugriffsvorrichtung einen Privatnetzwerk-Identifizierer (VLAN) hat, der die Zugriffsvorrichtung innerhalb des Rings eindeutig identifiziert;
Reservieren (120, 132) eines Medienpfades zu der Zugriffsvorrichtung; und
Einfügen (118) des Privatnetzwerk-Identifizierers (VLAN) in eine Vielzahl von von dem ersten Endpunkt (38a) empfangenen Rahmen, um die Rahmen an dem zweiten Endpunkt (38b) durch den Medienpfad zu routen.

9. Apparat gemäß Anspruch 8, wobei:
ein Knoten (28) betriebsfähig ist, mit einem anderen Knoten gemäß dem Ehternet over Synchronous Optical Network, SONET, Protokoll zu kommunizieren; und
die Vielzahl von Rahmen eine Vielzahl von Medien-über-Internet-Protocol-, IP, Paketen umfasst.

10. Apparat gemäß Anspruch 8, wobei das Routing-Modul (76) betriebsfähig ist, die Zugriffsvorrichtung, die zum Kommunizieren des Anrufs an den zweiten Endpunkt (38b) betriebsfähig ist, zu identifizieren durch:
Weiterleiten (104) der Aufforderung an eine Zwischenzugriffsvorrichtung (24, 40a);
Empfangen einer Verlaufsnachricht (108) von der Zwischenzugriffsvorrichtung, wobei die Verlaufsnachricht eine der Zugriffsvorrichtung entsprechende Adresse umfasst; und
Identifizieren (116) der Zugriffsvorrichtung in Übereinstimmung mit der Adresse.

11. Apparat gemäß Anspruch 8, wobei das Routing-Modul (76) betriebsfähig ist zum Reservieren des Medienpfades zu der Zugriffsvorrichtung durch:
Weiterleiten der Aufforderung an eine Zwischenzugriffsvorrichtung, um eine Etablierung des Medienpfades zu initiieren;
Empfangen einer Verlaufsnachricht von der Zwischenzugriffsvorrichtung, wobei die Verlaufsnachricht eine der Zugriffsvorrichtung entsprechende Adresse umfasst; und
Reservieren des Pfades in Ansprechen auf das Empfangen der Verlaufsnachricht.

12. Apparat gemäß Anspruch 8, wobei der Medium-Pfad ferner einen Echtzeittransportprotokoll-, RTP, Pfad umfasst.

13. Apparat gemäß Anspruch 8, wobei das Routing-Modul (76) ferner betriebsfähig ist zum Bestimmen des Privatnetzwerk-Identifizierers (VLAN), der mit der Zugriffsvorrichtung verknüpft ist, gemäß einer Routing-Tabelle (80).

14. Logik zum Routen von Rahmen in einem Kommunikationsring, der eine Resilient-Packet-Ring-Technologie mit SONET-Vorrichtungen umfasst, wobei die Logik im Medium aufgenommen ist und betriebsfähig ist zum:
Empfangen einer Aufforderung bei einem Proxy-Server eines Knotens, wobei der Knoten zu einem Ring gehört, wobei der Ring eine Vielzahl von Knoten umfasst, wobei jeder Ring betriebsfähig ist, mit einem anderen Knoten zu kommunizieren, wobei die Aufforderung angibt, dass ein erster Endpunkt einen Anruf an einen zweiten Endpunkt initiiert, wobei der erste und der zweite Endpunkt durch den Ring erreichbar sind; Identifizieren einer Zugriffsvorrichtung, die zum Kommunizieren des Anrufs an den zweiten Endpunkt betriebsfähig ist, wobei die Zugriffsvorrichtung durch den Ring erreichbar ist, wobei die Zugriffsvorrichtung einen Privatnetzwerk-Identifizierer hat, der die Zugriffsvorrichtung innerhalb des Rings eindeutig identifiziert;
Reservieren eines Medienpfades zu der Zugriffsvorrichtung; und
Einfügen, durch den Proxy-Server, des Privatnetzwerk-Identifizierers in eine Vielzahl von von dem ersten Endpunkt empfangenen Rahmen, um die Rahmen an den zweiten Endpunkt durch den Medienpfad zu routen.

15. Logik gemäß Anspruch 14, wobei:
ein Knoten betriebsfähig ist, mit einem anderen Knoten gemäß dem Ehternet over Synchronous Optical Network, SONET, Protokoll zu kommunizieren; und
die Vielzahl von Rahmen eine Vielzahl von Medien-über-Internet-Protocol-, IP, Paketen umfasst.

16. Logik gemäß Anspruch 14, die ferner betriebsfähig ist, die Zugriffsvorrichtung, die zum Kommunizieren des Anrufs an den zweiten Endpunkt betriebsfähig ist, zu identifizieren durch:
Weiterleiten der Aufforderung an eine Zwischenzugriffsvorrichtung;
Empfangen einer Verlaufsnachricht von der Zwischenzugriffsvorrichtung, wobei die Verlaufsnachricht eine der Zugriffsvorrichtung entsprechende Adresse umfasst; und
Identifizieren der Zugriffsvorrichtung in Übereinstimmung mit der Adresse.

17. Logik gemäß Anspruch 14, ferner betriebsfähig zum Reservieren des Medium-Pfades zu der Zugriffsvorrichtung durch:
Weiterleiten der Aufforderung an eine Zwischenzugriffsvorrichtung, um eine Etablierung des Medium-Pfades zu initiieren;
Empfangen einer Verlaufsnachricht von der Zwischenzugriffsvorrichtung, wobei die Verlaufsnachricht eine der Zugriffsvorrichtung entsprechende Adresse umfasst; und
Reservieren des Pfades in Ansprechen auf das Empfangen der Verlaufsnachricht.

18. Logik gemäß Anspruch 14, wobei der Medium-Pfad ferner einen Echtzeittransportprotokoll-, RTP, Pfad umfasst.

19. Logik gemäß Anspruch 14, ferner betriebsfähig zum Bestimmen des Privatnetzwerk-Identifizierers, der mit der Zugriffsvorrichtung verknüpft ist, gemäß einer Routing-Tabelle.

20. System zum Routen von Rahmen in einem Kommunikationsring, der eine Resilient-Packet-Ring-Technologie mit SONET-Vorrichtungen umfasst, umfassend:
eine Einrichtung zum Empfangen einer Aufforderung bei einem Proxy-Server eines Knotens, wobei der Knoten zu einem Ring gehört, wobei der Ring eine Vielzahl von Knoten umfasst, wobei jeder Knoten betriebsfähig ist, mit einem anderen Knoten zu kommunizieren, wobei die Aufforderung angibt, dass ein erster Endpunkt einen Anruf an einen zweiten Endpunkt initiiert, wobei der erste und der zweite Endpunkt durch den Ring erreichbar sind;
eine Einrichtung zum Identifizieren einer Zugriffsvorrichtung, die betriebsfähig ist, den Anruf an den zweiten Endpunkt zu kommunizieren, wobei die Zugriffsvorrichtung durch den Ring erreichbar ist, wobei die Zugriffsvorrichtung einen Privatnetzwerk-Identifizierer hat, der die Zugriffsvorrichtung innerhalb des Rings eindeutig identifiziert;
eine Einrichtung zum Reservieren eines Medium-Pfades zu der Zugriffsvorrichtung; und
eine Einrichtung zum Einfügen, durch den Proxy-Server, des Privatnetzwerk-Identifizierers in eine Vielzahl von von dem ersten Endpunkt empfangenen Rahmen, um die Rahmen an den zweiten Endpunkt durch dem Medium-Pfad zu routen.

## Revendications

1. Procédé de routage de trames dans un anneau de communication (20) comprenant un anneau résilient pour paquets comprenant des dispositifs de type SONET, comprenant les étapes consistant :
recevoir une invitation (INVITE) au niveau d'un serveur mandataire (30) d'un noeud (28), le noeud appartenant à un anneau (20), l'anneau comportant une pluralité de noeuds, chaque noeud pouvant être mis en oeuvre pour communiquer avec un autre noeud, l'invitation indiquant qu'un premier point d'extrémité (38a) est en train d'initier un appel vers un second point d'extrémité (38b), les premier et second points d'extrémité pouvant être atteints par l'intermédiaire de l'anneau,
identifier (116) un dispositif d'accès (24, 44) pouvant être mis en oeuvre pour communiquer l'appel au second point d'extrémité (38b), le dispositif d'accès pouvant être atteint à travers l'anneau, le dispositif d'accès ayant un identificateur de réseau privé (VLAN) identifiant de manière unique le dispositif d'accès au sein de l'anneau,
réserver (120, 132) une voie de support vers le dispositif d'accès (24, 44), et
insérer, par le biais du serveur mandataire, l'identificateur de réseau privé dans une pluralité de trames reçues du premier point d'extrémité (38a) afin de router les trames vers le second point d'extrémité (38b) par l'intermédiaire de la voie de support.

2. Procédé selon la revendication 1, dans lequel :
un noeud peut être mis en oeuvre pour communiquer avec un autre noeud conformément au protocole Ethernet sur réseau optique synchrone, SONET, et
la pluralité de trames comprennent une pluralité de supports sur des paquets à protocole Internet, IP.

3. Procédé selon la revendication 1, dans lequel l'identification (116) du dispositif d'accès pouvant être mis en oeuvre pour communiquer l'appel au second point d'extrémité (38b) comprend en outre les étapes consistant à :
retransmettre (104) l'invitation à un dispositif d'accès intermédiaire (24, 40a),
recevoir un message de progression (108) du dispositif d'accès intermédiaire, le message de progression comprenant une adresse correspondant au dispositif d'accès, et
identifier (116) le dispositif d'accès conformément à l'adresse.

4. Procédé selon la revendication 1, dans lequel la réservation de la voie de support vers le dispositif d'accès comprend en outre les étapes consistant à :
retransmettre (104) l'invitation à un dispositif d'accès intermédiaire pour initier l'établissement de la voie de support,
recevoir un message de progression (108) du dispositif d'accès intermédiaire, le message de progression comprenant une adresse correspondant au dispositif d'accès, et
réserver (120, 132) la voie en réponse à la réception du message de progression.

5. Procédé selon la revendication 1, dans lequel la voie de support comprend en outre une voie à protocole de transmission en temps réel, RTP.

6. Procédé selon la revendication 1, comprenant en outre la détermination de l'identificateur de réseau privé (VLAN) associé au dispositif d'accès conformément à une table de routage (80).

7. Procédé selon la revendication 1,
dans lequel chaque noeud peut être mis en oeuvre pour communiquer avec un autre noeud conformément au protocole Ethernet sur réseau optique synchrone, SONET,
dans lequel, dans l'étape d'identification, le dispositif d'accès est identifié en :
retransmettant l'invitation à un dispositif d'accès intermédiaire,
recevant un message de progression du dispositif d'accès intermédiaire, le message de progression comprenant une adresse correspondant au dispositif d'accès, et
identifiant le dispositif d'accès conformément à l'adresse,
dans lequel, dans l'étape de réservation, la voie de support est réservée en réponse à la réception du message de progression, la voie de support comprenant en outre une voie à protocole de transmission en temps réel, RTP,
comprenant en outre :
la détermination de l'identificateur de réseau privé associé au dispositif d'accès conformément à une table de routage, et
dans lequel, dans l'étape d'insertion, la pluralité de trames comprennent une pluralité de paquets de support sur protocole Internet, IP.

8. Dispositif de routage de trames dans un anneau de communication (20), comprenant un anneau résilient pour paquets, comprenant des dispositifs de type SONET, comprenant :
une interface (70) pouvant être mise en oeuvre pour recevoir une invitation (INVITE) au niveau d'un serveur mandataire (30) d'un noeud (28), le noeud appartenant à un anneau, l'anneau comprenant une pluralité de noeuds, chaque noeud pouvant être mis en oeuvre pour communiquer avec un autre noeud, l'invitation indiquant qu'un premier point d'extrémité (38a) est en train d'initier un appel vers un second point d'extrémité (38b), où les premier et second points d'extrémité peuvent être atteints à travers l'anneau, et
un module de routage (76) couplé à l'interface (70) et pouvant être mis en oeuvre pour :
identifier (116) un dispositif d'accès pouvant être mis en oeuvre pour communiquer l'appel au second point d'extrémité, le dispositif d'accès pouvant être atteint à travers l'anneau, le dispositif d'accès ayant un identificateur de réseau privé (VLAN) identifiant de manière unique le dispositif d'accès au sein de l'anneau,
réserver (120, 132) une voie de support vers le dispositif d'accès, et
insérer (118) l'identificateur de réseau privé (VLAN) dans une pluralité de trames reçues du premier point d'extrémité (38a) afin de router les trames vers le second point d'extrémité (38b) par l'intermédiaire de la voie de support.

9. Dispositif selon la revendication 8, dans lequel :
un noeud (28) peut être mis en oeuvre pour communiquer avec un autre noeud conformément au protocole Ethernet sur réseau optique synchrone, SONET, et
la pluralité de trames comprennent une pluralité de paquets de support sur protocole Internet, IP.

10. Dispositif selon la revendication 8, dans lequel le module de routage (76) peut être mis en oeuvre pour identifier le dispositif d'accès pouvant être mis en oeuvre pour communiquer l'appel au second point d'extrémité (38b) en :
retransmettant (104) l'invitation à un dispositif d'accès intermédiaire (24, 40a),
recevant un message de progression (108) du dispositif d'accès intermédiaire, le message de progression comprenant une adresse correspondant au dispositif d'accès, et
identifier (116) le dispositif d'accès conformément à l'adresse.

11. Dispositif selon la revendication 8, dans lequel le module de routage (76) peut être mis en oeuvre pour réserver la voie de support vers le dispositif d'accès en :
retransmettant l'invitation à un dispositif d'accès intermédiaire pour initier l'établissement de la voie de support,
recevant un message de progression du dispositif d'accès intermédiaire, le message de progression comprenant une adresse correspondant au dispositif d'accès, et
réservant la voie en réponse à la réception du message de progression.

12. Dispositif selon la revendication 8, dans lequel la voie de support comprend en outre une voie à protocole de transmission en temps réel, RTP.

13. Dispositif selon la revendication 8, dans lequel le module de routage (76) peut en outre être mis en oeuvre pour déterminer l'identificateur de réseau privé (VLAN) associé au dispositif d'accès conformément à une table de routage (80).

14. Logique de routage de trames dans un anneau de communication, comprenant un anneau résilient pour paquets comprenant des dispositifs de type SONET, la logique étant intégrée dans un support et pouvant être mise en oeuvre pour :
recevoir une invitation au niveau d'un serveur mandataire d'un noeud, le noeud appartenant à un anneau, l'anneau comprenant une pluralité de noeuds, chaque noeud pouvant être mis en oeuvre pour communiquer avec un autre noeud, l'invitation indiquant qu'un premier point d'extrémité est en train d'initier un appel vers un second point d'extrémité, où les premier et second points d'extrémité peuvent être atteints à travers l'anneau,
identifier un dispositif d'accès pouvant être mis en oeuvre pour communiquer l'appel au second point d'extrémité, le dispositif d'accès pouvant être atteint à travers l'anneau, le dispositif d'accès ayant un identificateur de réseau privé identifiant de manière unique le dispositif d'accès au sein de l'anneau,
réserver un voie de support vers le dispositif d'accès, et
insérer, par le biais du serveur mandataire, l'identificateur de réseau privé dans une pluralité de trames reçues du premier point d'extrémité afin de router les trames vers le second point d'extrémité par l'intermédiaire de la voie de support.

15. Logique selon la revendication 14, dans laquelle:
un noeud peut être mis en oeuvre pour communiquer avec un autre noeud conformément au protocole Ethernet sur réseau optique synchrone, SONET, et
la pluralité de trames comprennent une pluralité de paquets de support sur protocole Internet, IP.

16. Logique selon la revendication 14, pouvant en outre être mise en oeuvre pour identifier le dispositif d'accès pouvant être mis en oeuvre pour communiquer l'appel au second point d'extrémité en :
retransmettant l'invitation à un dispositif d'accès intermédiaire,
recevant un message de progression du dispositif d'accès intermédiaire, le message de progression comprenant une adresse correspondant au dispositif d'accès, et
identifiant le dispositif d'accès conformément à l'adresse.

17. Logique selon la revendication 14, pouvant en outre être mise en oeuvre pour réserver la voie de support vers le dispositif d'accès en :
retransmettant l'invitation à un dispositif d'accès intermédiaire pour initier l'établissement de la voie de support,
recevant un message de progression du dispositif d'accès intermédiaire, le message de progression comprenant une adresse correspondant au dispositif d'accès, et
réserver la voie en réponse à la réception du message de progression.

18. Logique selon la revendication 14, dans laquelle la voie de support comprend en outre une voie à protocole de transmission en temps réel, RTP.

19. Logique selon la revendication 14, pouvant en outre être mise en oeuvre pour déterminer l'identificateur de réseau privé associé au dispositif d'accès conformément à une table de routage.

20. Système de routage de trames dans un anneau de communication, comprenant un anneau résilient pour paquets comprenant des dispositifs de type SONET, comprenant :
un moyen destiné à recevoir une invitation au niveau d'un serveur mandataire d'un noeud, le noeud appartenant à un anneau, l'anneau comprenant une pluralité de noeuds, chaque noeud pouvant être mis en oeuvre pour communiquer avec un autre noeud, l'invitation indiquant qu'un premier point d'extrémité est en train d'initier un appel vers un second point d'extrémité, où les premier et second points d'extrémité peuvent être atteints à travers l'anneau,
un moyen destiné à identifier un dispositif d'accès pouvant être mis en oeuvre pour communiquer l'appel vers le second point d'extrémité, le dispositif d'accès pouvant être atteint à travers l'anneau, le dispositif d'accès ayant un identificateur de réseau privé identifiant de manière unique le dispositif d'accès au sein de l'anneau,
un moyen destiné à réserver une voie de support vers le dispositif d'accès, et
un moyen destiné à insérer, par le biais du serveur mandataire, l'identificateur de réseau privé dans une pluralité de trames reçues du premier point d'extrémité afin de router les trames vers le second point d'extrémité par l'intermédiaire de la voie de support.
